# EUROPÄISCHE PATENTANMELDUNG

(11) **EP 1 897 780 A2**
(43) Veröffentlichungstag der Anmeldung: **12.03.2008**
(21) Anmeldenummer: 07017553.4
(22) Anmeldetag: 07.09.2007
(51) Int. Cl.: B61L 25/02, G01P 13/00

(54) **Magnetfelderkennungssystem**

(30) Priorität: 11.09.2006 AT 6642006 U
(71) Anmelder: Mattig-Schauer GmbH, 1140 Wien (AT)
(72) Erfinder: Stoll, Martin, 1030 Wien (AT); Dissauer, Wilhelm, 1020 Wien (AT); Herzog, Michael, 2380 Perchtoldsdorf (AT)
(74) Vertreter: Feder, Wolf-Dietrich

(57) **Zusammenfassung**

Die Erfindung betrifft ein System zur eindeutigen, zweifelsfreien und witterungsunabhängigen Erkennung des Zeitpunktes des Stillstandes eines Zuges entlang einer Bahnsteigkante, welche ortsfest mit dem M.E.S. Magnetfelderkennungssystem ausgerüstet ist. Als Messgröße für die Detektion des Zugstillstandes werden mittels mehrerer ortsfest an einer Bahnsteigkante (1) montierten Messsensoren (2) Veränderungen des natürlichen Erdmagnetfeldes, hervorgerufen durch den vorbeifahrenden und anhaltenden Zug herangezogen. Diese Erdmagnetfeldänderungen werden von den Messsensoren (2) als Messwerte erfasst und mittels eines Verbindungskabels (3) zu einem Steuerungs- und Auswerterechner (4) übertragen, der daraus ein den Stillstand des Fahrzeuges kennzeichnendes Signal generiert

## Beschreibung

### Beschreibungseinleitung:

Die Erfindung betrifft ein M.E.S. Magnetfelderkennungssystem zur witterungsunabhängigen Ermittlung des Anhaltens eines bestimmten, translatorisch auf einer vorgegebenen Bahn bewegten Fahrzeuges.

### Stand der Technik:

Bisherige Systeme funktionieren mit Radar, Ultraschall, Infrarotdetektoren, Bilderkennungsverfahren oder einer Kombination aus diesen (vgl. etwa EP 0 989 408 A1 "Verfahren zur Ermittlung der Verzögerung bzw. des Anhaltens eines bewegten Gegenstandes, Vorrichtung zur Durchführung dieses Verfahrens sowie Verwendung dieses Verfahrens und dieser Vorxichtung"). Diese Methoden haben gemein, dass der Erfassungsbereich oder die Eindeutigkeit der Erfassung von Fahrzeigen durch Witterungsbedingungen wie etwa Nebel und Eis oft eingeschränkt ist. Ebenso wirken sich Verschmutzungen wie etwa Bremsstaub negativ aus. Systeme, welche im Bereich des Gleiskörpers montiert sind, weisen höheren Aufwand bei Montage- und Wartung auf.

### Aufgabe der Erfindung:

Der Erfindung liegt somit die Aufgabe zugrunde, ein M.E.S. Magnetfelderkennungssystem so auszugestalten, dass eine witterungsunabhängige Erkennung des Zugstillstandes an der zu überwachenden Bahnsteigkante erfolgen kann.

### Lösung der gestellten Aufgabe:

Die Erfindung löst die Aufgabe dadurch, dass mehrere Messsensoren entlang der zu überwachenden Bahnsteigkante die Veränderung des durch ein vorbeifahrendes oder anhaltendes Schienenfahrzeug veränderten Erdmagnetfeld als Messwerte erfassen. Diese Messwerte werden an einen Steuerungs- und Auswerterechner übertragen, welcher daraus den Zugstillstand erkennt. Der Abstand zwischen den Messsensoren richtet sich nach der gewünschten Detektionszeit des Fahrzeugstillstandes.

Der Sensor im weiteren Sinn besteht aus einem Magnetfeldsensor welcher mit der Sensorelektronik verbunden ist. Diese Sensorelektronik dient zur Aufbereitung des Messsignals und besteht aus Vorverstärkern, Filtern und Signalverstärkern. Die Messung des Magnetfeldes kann in einer oder auch mehreren Achsen (z.B. x,y,z) zur Erhöhung der Eindeutigkeit der Stillstandserkennung durchgeführt werden.

Dieses aufbereitete Messsignal wird über einen Analog/Digital-Wandler einem Mikroprozessor, welcher auch Bestandteil der Sensorelektronik ist, zugeführt. Über eine Busleitung werden die Messdaten aller angeschlossenen Sensoren periodisch an einen zentralen Steuerungs- und Auswerterechner übertragen.

Durch die Erfassung und Analyse der zeitlichen Verläufe sämtlicher Sensordaten kann dieser zentrale Steuerungs- und Auswerterechner ein vorbeifahrendes und anschließend zum Stillstand kommendes Schienenfahrzeug erkennen. Dazu werden die Signalwechselspannungen nach Signalverlauf, Mittelwert, Amplitude und differenziellen Änderungen nach der Zeit bewertet. Über eine anwendungsspezifische Datenschnittstelle wird der Zugstillstand an ein übergeordnetes System gemeldet. Außerdem kann ein ungefähres Geschwindigkeitsprofil des Fahrzeuges erstellt, und die Fahrzeuglänge ermittelt werden.

### Effekte der Erfindung und Unteransprüche:

Das eindeutige Erkennen eines Zugstillstandes kann dazu verwendet werden um etwa automatische Ansagen für Anschluss- oder Umstiegsmöglichkeiten auszulösen. Das Erkennen des Stillstandsende kann für die Aktualisierung der Darstellung von Informationen den nächsten ankommenden Zug betreffend herangezogen werden.

### Zeichnungsfiguren:

Fig. 1 zeigt einen typischen Aufbau eines erfindungsgemäßen M.E.S Magnetfelderkennungssystem.
Fig. 2 zeigt einen typische Signalverlauf des von einem erfindungsgemäßen Sensor gemessenen Magnetfeldes für einen einfahrenden, stehen bleibenden und wieder wegfahrenden Zug.

### Figurenbeschreibung:

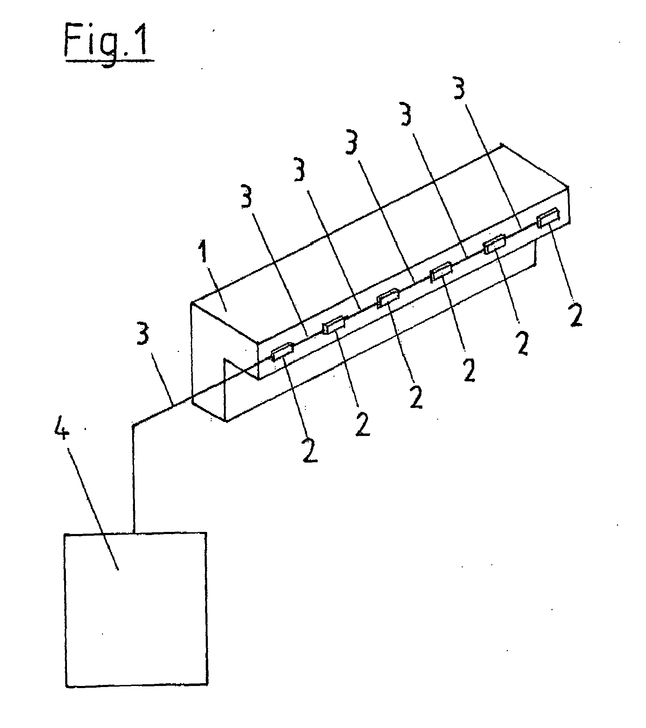

Gemäß dem in Fig. 1 dargestellten Ausführungsbeispiel besteht das erfindungsgemäße Zugstillstandserkennungssystem aus einzelnen Messsensoren 2 welche entlang einer Bahnsteigkante 1 montiert sind und durch ein Verbindungskabel 3 zur Energieversorgung und

Datenübertragung der Messdaten verbunden sind. Ein Steuerungs- und Auswerterechner 4 empfängt die von den Sensoren erfassten Messwerte und generiert daraus ein den Zugstillstand kennzeichnendes Signal.

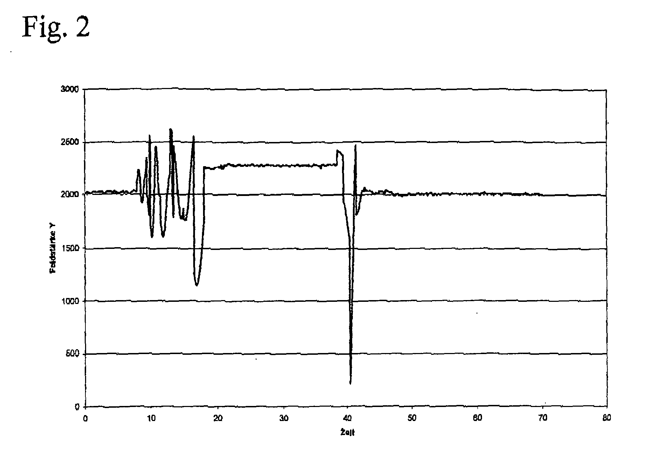

Fig. 2 zeigt einen typischen Signalverlauf des Magnetfeldes eines Sensors für einen einfahrenden, stehen bleibenden und wieder wegfahrenden Zug. Im Bereich der Zeitachse von 0 bis 8 Sekunden naht der Zug, fährt aber noch nicht am Sensor vorbei. Im Bereich der Zeitachse zwischen 8 Sekunden und 18 Sekunden fährt der Zug am Sensor vorbei. Im Bereich der Zeitachse zwischen 18 und 38 Sekunden steht der Zug neben dem Sensor. Im Bereich der Zeitachse zwischen 38 Sekunden und 43 Sekunden fährt der neben dem Sensor stehende Zug ab. Im Bereich der Zeitachse größer als 43 Sekunden hat der Zug den Sensorbereich bereits verlassen und entfernt sich.

## Patentansprüche

1. M.E.S. Magnetfelderkennungssystem zur witterungsunabhängigen Ermittlung des Anhaltens eines bestimmten, translatorisch auf einer vorgegebenen Bahn (1) bewegten Fahrzeuges, **dadurch gekennzeichnet, dass** mehrere Messsensoren (2) ortsfest entlang dieser Bahn (1) montiert, Erdmagnetfeldänderungen als Messwerte erfassen und diese über ein Verbindungskabel (3) zu einem Steuerungs- und Auswerterechner (4) übertragen, der daraus ein den Stillstand des Fahrzeuges kennzeichnendes Signal generiert.

2. M.E.S. Magnetfelderkennungssystem nach Anspruch 1, **dadurch gekennzeichnet, dass** die Messsensoren (2) das durch die Fahrzeugbewegung beeinflusste Erdmagnetfeld in einer oder auch mehreren Achsen erfasst, dieses Messsignal mittels Vorverstärkern, Filtern und Signalverstärkern aufbereitet und dem Analog/Digital-Wandler eines sensorinternen Mikroprozessors zugeführt wird.

3. M.E.S. Magnetfelderkennungssystem nach Anspruch 1 oder 2, **dadurch gekennzeichnet, dass** ein Steuerungs- und Auswerterechner (4) über ein Verbindungskabel (3) Messdaten von den Messsensoren (2) erhält und daraus eine den Stillstand des Fahrzeuges kennzeichnende Information bilden kann.
